# EUROPÄISCHE PATENTSCHRIFT

(11) **EP 1 128 944 B1**
(45) Veröffentlichungstag und Bekanntmachung des Hinweises auf die Patenterteilung: **04.06.2003**
(21) Anmeldenummer: 98962332.7
(22) Anmeldetag: 12.11.1998
(51) Int. Cl.: B29C 44/12

(54) **VERFAHREN ZUM HERSTELLEN EINES FORMTEILES, INSBESONDERE EINES SCHALENTEILES FÜR EINEN FAHR- ODER FLUGGASTSITZ**
METHOD FOR PRODUCING A MOULDED PART, ESPECIALLY A SHELL MEMBER FOR A CAR OR PLANE PASSENGER SEAT
PROCEDE POUR PRODUIRE UNE PIECE MOULEE, NOTAMMENT UN ELEMENT DE COQUE DESTINE A UN SIEGE D'AUTOMOBILE OU D'AVION

(43) Veröffentlichungstag der Anmeldung: 05.09.2001
(73) Patentinhaber: Gottlieb Binder GmbH & Co., 71088 Holzgerlingen (DE)
(72) Erfinder: POULAKIS, Konstantinos, D-01896 Pulsnitz (DE)
(74) Vertreter: Patentanwälte Bartels und Partner
(86) Internationale Anmeldenummer: EP9807240
(87) Internationale Veröffentlichungsnummer: WO00029189

(56) Entgegenhaltungen:
- EP-A- 0 612 485
- US-A- 5 654 070

## Beschreibung

Die Erfindung bezieht sich auf ein Verfahren zum Herstellen eines Formteiles, insbesondere eines Schalenteiles für einen Fahr- oder Fluggastsitz, unter Einsatz von Kunststoffmaterial und einer für einen Formvorgang mit einem Arbeitsdruck beaufschlagbaren Form mit einer Aufnahme, in die ein an das Formteil anzuformendes Haftverschlußteil mit an einem Träger befindlichen Haftelementen eingelegt wird.

Bekannte Verfahren dieser Art, vergleiche beispielsweise EP 0 612 485 A1 oder US 5 654 070 A, führen zu annehmbaren Ergebnissen, wenn der betreffende Formvorgang mit niedrigen Arbeitsdrücken ausgeführt werden kann. Dies ist beispielsweise der Fall, wenn es sich bei den Formteilen um Schaumstoffteile handelt, etwa um Polsterschaumteile für Sitze, wobei der Formvorgang durch Zuführen eines Weichschaumes in eine Einschäumform durchgeführt wird, was mit verhältnismäßig niedrigen Einspritzdrücken geschehen kann, so daß das durch Einschäumen an das Formteil anzuformende Haftverschlußteil beim Formvorgang lediglich unter Einwirkung eines mäßigen Arbeitsdruckes steht.

Wenn andererseits Formvorgänge durchgeführt werden sollen, die höhere Arbeitsdrücke erforderlich machen, wie dies beispielsweise bei der Herstellung harter Sitzschalen oder Schalenteile der Fall ist, die aus Hartschäumen hergestellt werden, wobei Arbeitsdrücke in der Größenordnung von etwa 5 bis 10 bar erforderlich sind, kommt es zu einem Verdrücken des in der Aufnahme befindlichen Haftverschlußteiles, was zur fehlerhaften, beispielsweise nicht konturkonformen Einschäumung des Haftverschlußteiles an der Oberfläche des Formteiles oder zu einem Flachquetschen der Haftelemente führt. Diese Probleme treten um so stärker in Erscheinung, je höher die anzuwendenden Arbeitsdrücke sind, wie dies beispielsweise bei Formvorgängen durch Spritzgießen oder bei der Verarbeitung von Prepregs der Fall ist, wo der Formvorgang durch Verpressen einer betreffenden Harzmatte in einem heißen Formwerkzeug bei Drücken zwischen 30 und 150 bar durchgeführt wird. Aufgrund der hierbei auftretenden Belastungen ist es bislang nicht möglich, Haftverschlußteile beim Formvorgang an das betreffende Formteil anzulaminieren.

Der Erfindung liegt die Aufgabe zugrunde, ein Verfahren aufzuzeigen, das die Möglichkeit eröffnet, Haftverschlußteile an ein Formteil anzuformen, selbst wenn beim Formvorgang sehr hohe Arbeitsdrücke erforderlich sind.

Bei einem Verfahren der eingangs genannten Art ist diese Aufgabe erfindungsgemäß dadurch gelöst, daß das HaftverscNußteil gegen die Einwirkung des Arbeitsdruckes beim Formvorgang mittels einer in der Aufnahme angeordneten Stachelfläche abgestützt wird, die durch eine Vielzahl vorspringender Stacheln gebildet wird, die in die Zwischenräume zwischen den Haftelementen des Haftverschlußteiles so eingreifen, daß dessen Träger an die Spitzen der Stacheln angelegt wird.

Die zwischen die Haftelemente eingreifenden Stacheln bilden insgesamt eine Anlagefläche, bei der die örtliche Flächenpressung gegenüber dem Träger des Haftverschlußteiles aufgrund der großen Vielzahl der Spitzen verhältnismäßig gering bleibt, selbst bei stärkerem Anpreßdruck aufgrund von hohen Arbeitsdrücken. Die Abstützwirkung ist hierbei in grober Näherung vergleichbar mit den Verhältnissen bei einem sogenannten Nagelbett auf dem wegen der großen Anzahl der Spitzen und der großflächigen Anlage ein schwergewichtiger Körper sicher lagerbar ist. Dadurch, daß die Spitzen in die Zwischenräume zwischen den Haftelementen eingreifen, erfolgt die Abstützung ohne die Gefahr einer Verformung der Haftelemente.

Die Stachelfläche kann durch eine Art Kratzenband gebildet sein, das in die Aufnahme der betreffenden Form eingelegt ist. Bei einem derartigen Kratzenband handelt es sich um ein textiles Flachmaterial mit einer Vielzahl darin verankerter U-förmiger Metalldrähte, beispielsweise aus Edelstahl, wobei die offenen Enden der U-Form jeweils die Stacheln bilden und das geschlossene Ende der U-Form den Verankerungsteil in dem Flachmaterial bildet. Bei dem textilen Flachmaterial kann es sich um ein ähnliches Material handeln, wie es aus der DE 296 11 207 U1 bekannt ist, also um einen mehrschichtigen Stoffverbund aus Baumwolle und hochtemperaturbeständigem Polyamid, im Handel erhältlich unter der Bezeichnung "NOMEX ®".

Die erfindungsgemäß vorgesehene Abstützung des Haftverschlußteiles in der Aufnahme der betreffenden Form ermöglicht eine problemlose Herstellung von Sitzschalen, Schalenteilen oder andersartigen Gegenständen aus Hartschaum mit an der Oberfläche des betreffenden Teiles eingeschäumtem Haftverschlußteil. Da beim erfindungsgemäßen Verfahren mit hohen Arbeitsdrücken gearbeitet werden kann, lassen sich praktisch alle zur Verfügung stehenden schäumbaren Materialien verarbeiten, die auch Zusatzstoffe enthalten können, etwa Bariumsulfat (Schwerspatschaum). Schäumvorgänge können auch bei in die betreffende Einschäumform eingelegten Faserverstärkungen durchgeführt werden.

Ein besonderer Vorteil der Erfindung besteht darin, daß auch Spritzgußteile mit an der Oberfläche angespritztem Haftverschlußteil hergestellt werden können oder Formteile in Form von Laminaten. Das erfindungsgemäße Verfahren kann beispielsweise unter Verwendung von PUR-Prepregs durchgeführt werden, wobei als Form, in deren die Stachelfläche aufweisende Aufnahme das Hartverschlußteil eingelegt wird, ein heißes Formwerkzeug benutzt wird, in dem die betreffende Harzmatte bei 130 bis 150°C bei Arbeitsdrücken zwischen 30 und 150 bar verpreßt wird.

Bei Durchführung des Verfahrens unter Verwendung fließfähiger Kunststoffmaterialien wird das Haftverschlußteil vorzugsweise mit einer Abdekkung versehen, die beim Formvorgang den Zutritt von Kunststoffmaterial zu den Haftelementen verhindert. Bei Verarbeitung schäumbarer Kunststoffmaterialien wird hierbei vorzugsweise so vorgegangen, daß eine schaumabhaltende Abdeckung auf der von den Haftelementen abgekehrten Seite mit einer vorgebbaren Randbreite über den Flächenbereich der Haftelemente überstehend angeordnet, mit dem Träger des Haftverschlußteiles durch Klebstoff verbunden und mit einer Halteeinrichtung in lösbare Anlage zumindest mit die Aufnahme umgebenden Teilen der Einschäumform gebracht. Wird hierbei die Abdeckung mit ferromagnetischen Bestandteilen versehen und werden an entsprechenden Oberflächenbereichen der Einschäumform magnetfelderzeugende Einrichtungen, beispielsweise Dauermagnetleisten, angebracht, dann bilden die über den Flächenbereich der Haftelemente überstehenden Ränder der schaumabhaltenden Abdeckung selbst einen Teil einer magnetischen Halteeinrichtung zur Festlegung des Hartverschlußteiles an der Einschäumform.

Als schaumabhaltende Abdeckung kann ein Vliesstoff mit unvernetztem Polyurethan und unter Zusatz von ferromagnetischen Partikeln mit der von den Haftelementen abgewandten Seite des Trägers verklebt werden. Beim Einschäumvorgang dringt das Kunststoffmaterial, in Form von Hart- oder Weichschaum, in die Struktur des Vlieses ein, so daß es zu inniger Verbindung kommt.

Wenn zur Befestigung der Vliesabdeckung am Träger des Hartverschlußteiles ein durch Wärme reaktivierbarer Klebstoff verwendet wird, kann in vorteilhafter Weise so vorgegangen werden, daß das Haftverschlußteil zunächst ohne schaumabhaltende Abdeckung auf der Stachelfläche in der Aufnahme der Einschäumform angeordnet wird, daß dann, bei auf dem Träger des Haftverschlußteiles oder an der zugekehrten Fläche der Vliesabdeckung befindlichem reaktivierbarem Klebstoff, die Vliesabdeckung auf den Träger des Haftverschlußteiles so aufgelegt wird, daß die überstehenden Ränder der Vliesabdeckung magnetisch an der Einschäumform haften, daß dann der Einschäumvorgang durchgeführt und der Klebstoff dabei gleichzeitig durch die beim Einschäumvorgang erfolgende Erhitzung aktiviert wird, so daß nach Beendigung des Einschäumvorganges und dem Entformen das Haftverschlußteil mit der in das Formteil eingeschäumten Vliesabdeckung fest verklebt ist.

Gegenstand der Erfindung ist auch ein nach dem erfindungsgemäßen Verfahren hergestelltes Formteil, insbesondere in Form eines Hartschalenteiles für einen Fahr- oder Fluggastsitz, mit einem Haftverschfußteil, dessen Haftelemente in einem Oberflächenbereich des Formteiles freiliegen.

Nachstehend ist die Erfindung anhand der Zeichnung im einzelnen erläutert.

Darin zeigen:

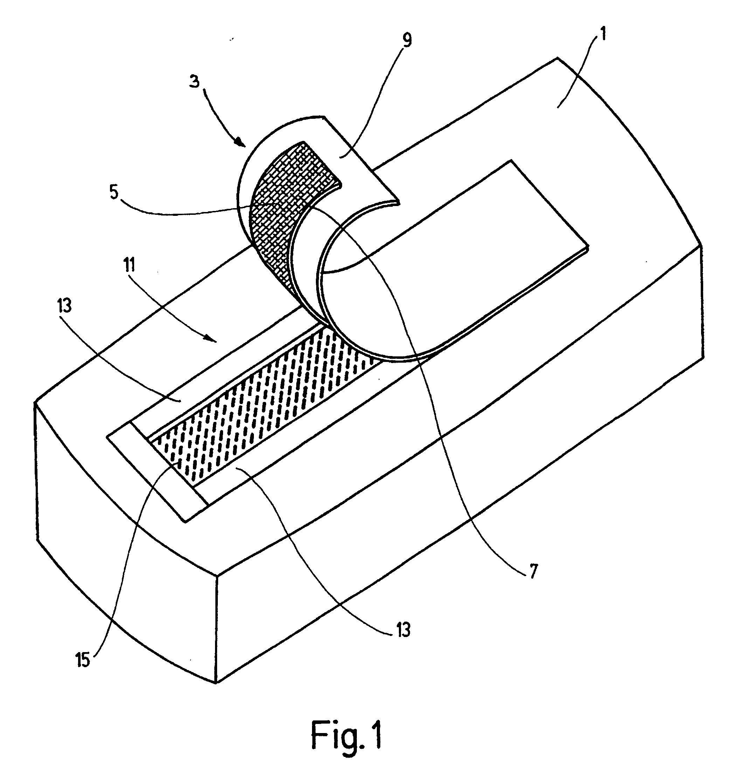

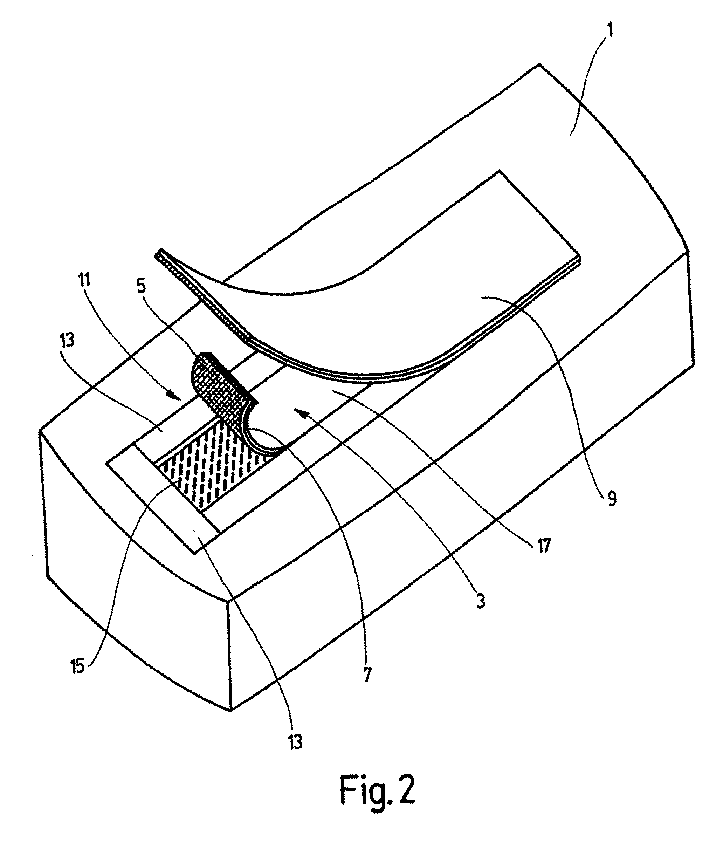

- Fig. 1 und 2: jeweils in perspektivischer, schematisch vereinfachter Darstellung, ein erstes bzw. zweites Ausführungsbeispiel der Erfindung, die beide die Verarbeitung schäumbaren Kunststoffmaterials betreffen.

In Fig. 1 ist derjenige Teil einer Einschäumform 1 gezeigt, der eine ins Innere des Formhohlraumes vorspringende, sogenannte Pfeife bildet, durch die in dem beim Schäumvorgang gebildeten Formteil eine Vertiefung geformt wird. Am Grund dieser Vertiefung soll das als Ganzes mit 3 bezeichnete Haftverschlußteil in die Oberfläche des Formteiles so eingeschäumt werden, daß die Haftelemente 5 des Haftverschlußteiles 3 freiliegen. Die an der Vorderseite eines Trägers 7 angeformten Haftverschlußelemente sind in üblicher Weise Stengel mit endseitigen Häkchen oder endseitigen Verdikkungen in Form von Pilz- oder tellerförmigen Köpfen. Derartige Haftverschlußteile sind beispielsweise aus der DE 198 46 318 A1 bekannt. Bei dem in Fig. 1 dargestellten Ausführungsbeispiel ist an der von den Haftelementen 5 abgekehrten Rückseite des Trägers 7 ein Vliesstoff 9 als schaumabhaltende Abdeckung am Träger 7 angeklebt. Der Vliesstoff 9 ist so bemessen, daß er allseits mit einer gewissen Randbreite über den Flächenbereich der Haftelemente 5 überstehend ist. Außerdem ist der Vliesstoff 9 mit einer Beschichtung aus unvernetztem PU versehen, beispielsweise einem Polyurethan, wie es unter der Bezeichnung SU-9182 ® von der Firma Stahl vertrieben wird, das beigemengte Fe-Partikel der Korngröße <10µ als ferromagnetisches Material enthält.

Die Einschäumform 1 weist eine Aufnahme 11 auf, an der das Haftverschlußteil 3 für den Einschäumvorgang anlegbar ist. Die Ränder der Aufnahme 11 sind von Magnetleisten 13 umgeben, so daß bei an der Aufnahme 11 in Stellung gebrachtem Haftverschlußteil 3 die überstehenden Ränder des Vliesstoffes 9 aufgrund ihrer ferromagnetischen Eigenschaft zusammen mit den Magnetleisten 13 eine Halteeinrichtung für das Haftverschlußteil 3 bilden. Gleichzeitig bildet der Vliesstoff 9 durch die randseitige Anlage an den Magnetleisten 13 eine Abdeckung, die beim Einschäumvorgang den Zutritt von Schaummaterial zu den Haftelementen 5 verhindert.

Die den Haftelementen 5 zugewandte Seite der Aufnahme 11 bildet eine Abstützung für das Haftverschlußteil 3 gegen die auf dieses bei entsprechenden Einspritzdrücken einwirkende Druckkraft. Die Abstützung erfolgt mittels einer Stachelfläche, die durch ein in die Aufnahme 11 eingelegtes Kratzenband 15 mit geraden Stacheln gebildet ist. Das Kratzenband 15 weist ein rückseitiges, textiles Flachmaterial auf, in dem eine Vielzahl U-förmiger Metalldrähte verankert ist, die mit den offenen Enden der U-form jeweils aus dem Flachmaterial vorspringende Stacheln bilden. Die Stacheln, die in Fig. 1 zur Verdeutlichung in verringerter Anzahl und mit vergrößerter Dicke dargestellt sind, sind bei der praktischen Ausführungsform in sehr hoher Anzahl vorgesehen und so fein ausgebildet, daß die Stacheln bei angelegtem Haftverschlußteil 3 in die Zwischenräume zwischen den Haftelementen 5 so eintreten, daß die Spitzen der Stacheln in nagelbettartige Anlage mit dem Träger 7 des Haftverschlußteiles 3 gelangen. Auf diese Weise ist das Haftverschlußteil 3 gegen die beim Einschäumvorgang, der bei Verwendung eines Hartschaumes mit Drücken in der Größenordnung von annähernd 10 bar stattfinden kann, sicher abgestützt, so daß keine Beeinträchtigung der Haftelemente 5 zu befürchten ist.

Das in Fig.2 gezeigte Ausführungsbeispiel unterscheidet sich vom ersten Ausführungsbeispiel dadurch, daß das Haftverschlußteil 3 ohne zunächst am Träger 7 angebrachten Vliesstoff 9 in der Aufnahme 11 der Einschäumform 1 in Stellung gebracht wird. jedoch weist das Haftverschlußteil 3 auf der den Haftelementen 5 abgewandten Rückseite des Trägers 7 eine Schicht eines wärmereaktivierbaren Klebstoffes 17 auf. Hierbei kann es sich um einen Klebstoff auf Nitril-Kautschuk-Basis oder einen Polyamidklebstoff handeln. Geeignet hierfür ist u.a. ein unter der Bezeichnung BOSTIK 1475® im Handel erhältlicher Klebstoff.

Nach Anlegen des Haftverschlußteiles 3 an die Aufnahme 11 wird der Vliesstoff 9 aufgelegt, der hinsichtlich seiner Abmessungen und seiner ferromagnetischen Eigenschaften gleich wie beim ersten Ausführungsbeispiel ausgebildet ist. Bei dem nunmehr erfolgenden Einschäumvorgang, bei dem die Temperatur des Kunststoffmaterials beispielsweise im Bereich von 140°C liegt, wird der Klebstoff 17 reaktiviert. Beim Einschäumvorgang wird daher nicht nur der Vliesstoff 9 an der Oberfläche des gebildeten Formteiles in dieses eingeschäumt, sondern gleichzeitig die feste Verbindung mit dem Haftverschlußteil 3 durch Verkleben hergestellt, während der Vliesstoff 9 aufgrund des randseitigen, durch Magnetkraft bewirkten Anhaftens an den Rändern der Aufnahme 11 den Bereich der Haftelemente 5 gegen eindringenden Schaum abdeckt.

## Patentansprüche

1. Verfahren zum Herstellen eines Formteiles, insbesondere eines Schalenteiles für einen Fahr- oder Fluggastsitz, unter Einsatz von Kunststoffmaterial und einer für einen Formvorgang mit einem Arbeitsdruck beaufschlagbaren Form (1) mit einer Aufnahme (11), in die ein an das Formteil anzuformendes Haftverschlußteil (3) mit an einem Träger (7) befindlichen Haftelementen (5) eingelegt wird, **dadurch gekennzeichnet, daß** das Haftverschlußteil (3) gegen die Einwirkung des Arbeitsdruckes beim Formvorgang mittels einer in der Aufnahme (11) angeordneten Stachelflache (15) abgestützt wird, die durch eine Vielzahl vorspringender Stacheln gebildet wird, die in die Zwischenräume zwischen den Haftelementen (5) des Haftverschlußteiles (3) so eingreifen, daß dessen Träger (7) an die Spitzen der Stacheln angelegt wird.

2. Verfahren nach Anspruch 1, **dadurch gekennzeichnet, daß** zum Herstellen eines Formteiles durch Verarbeitung eines PUR-Prepreg die betreffende Harzmatte in der heißen Form zum Formteil verpreßt und das Haftverschlußteil an dieses anlaminiert wird,

3. Verfahren nach Anspruch 1, **dadurch gekennzeichnet, daß** zum Herstellen eines Formteils in Form eines Spritzgießteiles mit angespritztem Haftverschlußteil dieses in die Aufnahme in einer Spritzform eingelegt und in diese das Kunststoffmaterial eingespritzt wird.

4. Verfahren nach Anspruch 1, **dadurch gekennzeichnet, daß** zum Herstellen eines Formteiles aus schäumbarem Kunststoffmaterial das Haftverschlußteil (3) in die Aufnahme (11) in einer Einschäumform (1) eingelegt und in diese das Kunststoffmaterial eingespritzt wird.

5. Verfahren nach einem der Ansprüche 1 bis 4, **dadurch gekennzeichnet, daß** das Haftverschlußteil (3) mit einer Abdeckung (9) versehen wird, die beim Formvorgang den Zutritt von Kunststoffmaterial zu den Haftelementen (5) verhindert.

6. Verfahren nach den Ansprüchen 4 oder 5, **dadurch gekennzeichnet, daß** eine schaumabhaltende Abdeckung (9) auf der von den Haftelementen (5) abgekehrten Seite mit einer vorgebbaren Randbreite über den Flächenbereich der Haftelemente (5) überstehend mit dem Träger (7) des Haftverschlußteiles (3) durch Klebstoff verbunden und mit einer Halteeinrichtung in lösbare Anlage zumindest mit die Aufnahme (11) umgebenden Teilen der Einschäumform (1) gebracht wird.

7. Verfahren nach Anspruch 6, **dadurch gekennzeichnet, daß** die Abdeckung (9) mit ferromagnetischen Bestandteilen versehen und als der eine Teil der Halteeinrichtung benutzt wird, deren der Einschäumform (1) zugehöriger anderer Teil durch an dieser angeordnete magnetfelderzeugende Halteelemente (13) gebildet wird, an denen die über die Haftelemente (5) überstehenden Ränder der Abdeckung (9) beim Einschäumvorgang gehalten werden.

8. Verfahren nach einem der Ansprüche 4 bis 7, **dadurch gekennzeichnet, daß** als Kunststoffmaterial ein heißer Hartschaum verwendet wird.

9. Verfahren nach Anspruch 8, **dadurch gekennzeichnet, daß** eine in das Kunststoffmaterial einzuschäumende Faserverstärkung in die Einschäumform (1) eingelegt wird.

10. Verfahren nach einem der Ansprüche 5 bis 9, **dadurch gekennzeichnet, daß** als schaumabhaltende Abdeckung ein Vlies (9) am Träger (7) der Haftelemente (5) angebracht wird.

11. Verfahren nach den Ansprüchen 9 und 10, **dadurch gekennzeichnet, daß** der Träger (7) des Haftverschlußteiles (3) auf der dem Vlies (9) zugekehrten Seite mit einem durch Wärme reaktivierbaren Klebstoff (17) versehen wird, daß das Haftverschlußteil (3) vor dem Anbringen des Vlieses (9) an der Aufnahme (11) der Einschäumform (1) angeordnet wird und daß dann das Vlies (9) angelegt und die Verbindung von Haftverschlußteil (3) und schaumabhaltendem Vlies (9) durch die beim Einschäumvorgang eintretende Erhitzung durch Reaktivieren des Klebstoffs (17) bewirkt wird.

12. Verfahren nach Anspruch 11, **dadurch gekennzeichnet, daß** als reaktivierbarer Klebstoff ein Klebstoff (17) auf Nitril-Kautschuk-Basis oder ein Polyamidklebstoff verwendet wird.

13. Verfahren nach einem der Ansprüche 1 bis 12, **dadurch gekennzeichnet, daß** als in der Aufnahme (11) der Form (1) angeordnete Stachelfläche ein textiles Flachmaterial mit einer Vielzahl darin verankerter U-förmiger Metalldrähte verwendet wird, wobei die offenen Enden der U-Form jeweils die Stacheln bilden und das geschlossene Ende der U-Form den Verankerungsteil in dem Flachmaterial bildet.

14. Nach dem Verfahren nach einem der Ansprüche 1 bis 13 hergestelltes Formteil, insbesondere in Form eines Hartschalenteiles für einen Fahroder Fluggastsitz, mit einem Haftverschlußteil (3), dessen Haftelemente (5) in einem Oberflächenbereich des Formteiles freiliegen.

## Claims

1. A method for producing a moulded part, in particular a shell member for a car or plane passenger seat by using a plastic material and a mould (1) which can be subjected to a working pressure for a moulding process, with a housing (11) wherein an adhesive closure member (3) to be moulded on said moulded part is inserted together with the adhesive elements (5) located on a support (7), **characterised in that** the adhesive closure member (3) is supported by a spiky surface (15) which is placed in the housing (11) and acts against the working pressure during moulding, the said spiky surface being formed by a plurality of protruding spikes which enter the gaps between the adhesive elements (5) of the adhesive closure member (3) so that their support (7) comes into contact with the spike ends.

2. A method according to Claim 1, **characterised in that** to produce a moulded part by processing a polyurethane, the appropriate resin mat is pressed to form the moulded part in a hot mould and the adhesive closure member is laminated on to it.

3. A method according to Claim 1, **characterised in that** to produce a moulded part in the form of an injection moulding with an adhesive closure member injection moulded on to it, the adhesive closure member is placed in the housing in an injection mould and the plastic material is injected into it.

4. A method according to Claim 1, **characterised in that** to produce a moulded part of foamable plastic material, the adhesive closure member (3) is placed in the housing (11) in a foaming mould (1) and the plastic material is injected into it.

5. A method according to one of the Claims 1 to 4, **characterised in that** the adhesive closure member (3) is provided with a cover (9) which keeps the plastic material away from the adhesive elements (5) during the moulding operation.

6. A method according to Claim 4 or 5, **characterised in that** a cover (9) holding the foam back is bonded by means of an adhesive on the side away from the adhesive elements (5) with the carrier (7) of the adhesive closure member (3), and overlapping the surface of the adhesive elements (5) with an edge of a specified width, and brought into detachable contact by means of a holding device with the parts of the foaming mould (1) which surround the housing (11).

7. A method according to Claim 6, **characterised in that** the cover (9) is provided with ferromagnetic components and is used as the one part of the holding device, the other part of which belonging to the foaming mould (1) is formed by the holding elements (13) arranged at it and producing magnetic fields, at which the edges of the cover (9) overlapping the adhesive elements are held during the foaming operation.

8. A method according to one of the Claims 4 to 7, **characterised in that** a hot foam is used as the plastic material.

9. A method according to Claim 8, **characterised in that** a fibre reinforcement which is to be foamed in the plastic material is placed in the foaming mould (1).

10. A method according to one of the Claims 5 to 9, **characterised in that** fleece (9) is attached as the foam-barrier cover to the carrier (9) of the adhesive elements (5).

11. A method according to Claims 9 and 10, **characterised in that** the carrier (7) of the adhesive closure member (3) is provided with an adhesive (17) reactivated by heat on the side facing the fleece (9), that the adhesive closure member (3) is arranged on the housing (11) of the foaming mould (1) before the fleece (9) is fitted and that the fleece (9) is then applied and the adhesive closure member (3) connected to the foam-barrier fleece (9) by the heating occurring during the foaming process, due to reactivation of the adhesive (17).

12. A method according to Claim 11, **characterised in that** the reactivable adhesive used is an adhesive (17) on a nitrile rubber base or a polyamide adhesive.

13. A method according to one of the Claims 1 to 12, **characterised in that** a flat textile material with a plurality of U-shaped metal wires anchored in it is used as the spiky surface arranged in the housing (11) of the mould (1), whereby each of the open ends of the U-shape forms a spike and the closed end of the U-shape forms the anchoring part in the flat material.

14. A moulded part produced in accordance with the method according to one of the Claims 11 to 13, especially in the form of a hard shell member for a car or plane passenger seat with an adhesive closure member (3), the adhesive elements (5) of which are uncovered in a top surface area of the mould.

## Revendications

1. Procédé pour la fabrication d'une pièce moulée, en particulier d'une pièce de coque pour un siège de passager d'un véhicule ou de passager d'avion, en utilisant des matières plastiques et un moule (1) injectable avec une pression de fonctionnement pour un processus de moulage avec un logement (11) à l'intérieur duquel une pièce de fermeture adhésive (3) devant être moulée avec la pièce moulée avec des éléments adhésifs (5) situés sur un support (7) est déposée, **caractérisé en ce que** la pièce de fermeture adhésive (3) est accotée contre l'effet de la pression de fonctionnement lors du processus de moulage à l'aide d'une surface à pointes (15) disposée dans le logement (11), laquelle est formée d'une multitude de pointes en saillie lesquelles s'accrochent dans les espaces entre les éléments adhésifs (5) de la pièce de fermeture adhésive (3) de telle sorte que le support de cette dernière (7) repose contre les extrémités des pointes.

2. Procédé selon la revendication 1, **caractérisé en ce que** pour la fabrication d'une pièce moulée par transformation d'un polyuréthane-préimprégné, le mat imprégné de résine concerné est pressé dans le moule chaud pour devenir une pièce moulée et que la pièce de fermeture adhésive est rajoutée en couche stratifiée sur elle.

3. Procédé selon la revendication 1, **caractérisé en ce que** pour la fabrication d'une pièce moulée sous la forme d'une pièce de moulage par injection avec une pièce de fermeture adhésive moulée dessus par injection, celle-ci est insérée dans le logement dans un moule à injection, et **en ce que** la matière plastique y est injectée.

4. Procédé selon la revendication 1, **caractérisé en ce que** pour la fabrication d'une pièce moulée en matière plastique expansible, la pièce de fermeture adhésive (3) est insérée dans le logement (11) d'un moule pour mousse expansible (1), et **en ce que** la matière plastique y est injectée.

5. Procédé selon l'une quelconque des revendications 1 à 4, **caractérisé en ce que** la pièce de fermeture adhésive (3) est pourvue d'une couverture (9) laquelle empêche l'accès de la matière plastique aux éléments adhésifs (5) lors du processus de moulage.

6. Procédé selon la revendication 4 ou 5, **caractérisé en ce qu'**une couverture (9) retenant la mousse est reliée, du côté détourné des éléments adhésifs (5) dépassant d'une largeur de bord prédéfinissable la zone où se situent les éléments adhésifs (5), au support (7) de la pièce de fermeture adhésive (3) à l'aide de colle, et est aménagée de sorte à être amovible à l'aide d'un dispositif de maintient au moins avec les parties du moule à faire mousser (1) qui entourent le logement (11).

7. Procédé selon la revendication 6, **caractérisé en ce que** la couverture (9) est pourvue d'éléments ferromagnétiques de sorte qu'en cas d'utilisation d'une partie du dispositif de maintient, son autre partie faisant partie du moule à faire mousser (1) est formée par les éléments de maintient (13) disposés sur celui-ci provoquant des champs magnétiques, à l'aide desquels les bords de la couverture (9) dépassant les éléments adhésifs (5) sont maintenus lors du processus consistant à faire mousser.

8. Procédé selon l'une quelconque des revendications 4 à 7, **caractérisé en ce que** la matière plastique utilisée est une mousse chaude à haute résistance.

9. Procédé selon la revendication 8, **caractérisé en ce que** des fibres en guise de renforcement sont placées dans le moule à faire mousser (1) pour faire mousser avec la matière plastique.

10. Procédé selon l'une quelconque des revendications 5 à 9, **caractérisé en ce qu'**une toison (9) en guise de couverture retenant la mousse est fixée sur le support (7) des éléments adhésifs (5).

11. Procédé selon l'une des revendications 9 et 10, **caractérisé en ce que** le support (7) de la pièce de fermeture adhésive (3) est pourvu, sur le côté faisant face à la toison (9), d'une colle (17) réactivable sous l'effet de la chaleur, que la pièce de fermeture adhésive (3) est aménagée au logement (11) du moule à faire mousser (1) avant de fixer la toison (9) et qu'ensuite la toison (9) est fixée et que la liaison entre la pièce de fermeture adhésive (3) et la toison (9) retenant la mousse est provoquée par la formation de chaleur lors de processus consistant à faire mousser par réactivation de la colle (17).

12. Procédé selon la revendication 11, **caractérisé en ce qu'**une colle à base de caoutchouc nitrile ou une colle polyamide est utilisée en tant que colle réactivable.

13. Procédé selon l'une quelconque des revendications 1 à 12, **caractérisé en ce que**, en guise de surface à pointes aménagée dans le logement (11) du moule (1) est utilisée un matériau textile plat avec de nombreux fils métalliques en forme de U fixés dessus, moyennant quoi les extrémités ouvertes des formes en U font office de pointes et les extrémités fermées des formes en U forment l'ancrage dans le matériau plat.

14. Pièce moulée selon le procédé de l'une quelconque des revendications 1 à 13, en particulier sous forme de pièce de coque à haute résistance pour un siège de passager ou passager d'avion, avec une pièce de fermeture adhésive (3) dont les éléments adhésifs (5) reposent à découvert dans la zone de la surface.
